# EUROPEAN PATENT SPECIFICATION

(11) **EP 2 988 726 B1**
(45) Date of publication and mention of the grant of the patent: **31.12.2025**
(21) Application number: 14768901.2
(22) Date of filing: 13.03.2014
(51) Int. Cl.: A61K 8/84, A23K 10/00, A23K 10/10, A23K 40/00, A23K 40/20, A23K 20/147, A23K 20/158, A23K 50/45

(54) **DOG CHEW WITH INCREASED OCCUPANCY**
HUNDEKAUSPIELZEUG MIT ERHÖHTER BELEGUNG
PRODUIT À MÂCHER POUR CHIEN PRÉSENTANT UNE OCCUPATION ACCRUE

(30) Priority: 15.03.2013 US 201361793564 P
(43) Date of publication of application: 02.03.2016
(73) Proprietor: Mars, Incorporated, McLean, VA 22101 (US)
(72) Inventor: SLUSARCZYK, Peter Sebastian, McLean, VA 22101 (US); SMITH, Jonathan Christopher, McLean, VA 22101 (US); GUMUDAVELLI, Vinod, McLean, VA 22101 (US); NGUYEN, Justin, McLean, VA 22101 (US)
(74) Representative: Haseltine Lake Kempner LLP
(86) International application number: PCT/US2014/026892
(87) International publication number: WO 2014/152057

(56) References cited:
- EP-A1- 1 692 946
- EP-A1- 1 875 811
- WO-A1-00/13521
- US-A1- 2009 004 328
- US-A1- 2010 003 393
- US-A1- 2012 111 284
- US-A1- 2012 234 259

## Description

### FIELD OF INVENTION

The present invention is directed to the field of pet products. In particular, the present invention is directed to an edible pet chew having a unique twist configuration that enhances characteristics of the chew, prolongs oral occupancy and promotes dental hygiene. Further, the present invention is directed to modulating textural characteristics by varying the degree of twist present in such products.

### BACKGROUND

Pet chew products include those that are relatively hard and friable and those that are highly dense with more elastic or rubbery properties. The hard and friable pet chew products crumble or break down relatively quickly and are more easily digested, but have a relatively short occupancy time in the pet's mouth. The highly dense and elastic pet chew products are more difficult to chew, harder to digest, and have more extended occupancy time in the pet's mouth.

Another type of pet chew product includes those specially designed to address oral care problems. Many of these products are based on hard textures that require repeated chewing for efficacy. While such products may offer teeth cleaning functions, in many cases they pose risks to dogs either from physical injury such as gum injury, teeth fracture, or blockage of the digestive system. This situation is further exacerbated by the differences among pets of different sizes and types. For instance, a chew that may seem perfectly safe for some dog breeds may raise safety concerns when offered to other dog breeds.

Therefore, there remains a need for a product that is completely edible, long lasting and safe, that is designed to effectively clean teeth without risk of health damage such as choking, tooth damage, intestinal obstruction or other injury. Further, a need remains for designing pet chew products having textural characteristics that result in extended occupancy and oral health care properties and the ability to customize such textural characteristics for different pet sizes or types.
WO 00/13521 A1 discloses protein-based, edible chewable pet toys, such as artificial dog bones, and methods of preparing such chewable pet toys. The chewable pet toys are made from protein-based thermoplastic composition containing plant and animal-derived proteinic material and various additive and nutrient ingredients.
EP1692946 A1 discloses a product and a method of making a pet chew which is edible and highly digestible. The pet chew comprises 5 to about 50% (w/w) protein, about 20% to about 80% (w/w) carbohydrate, about 5 to about 50% (w/w) humectant and about 5% to about 30% (w/w) water.
US 2009/004328 A1 discloses an edible pet chew that is made of rehydrated hide about an inner fill via a positioning sheath.
EP1875811 A1 discloses a chewable and/or edible product for pets and other animals, especially for companion animals, mainly composed of a fibrous collagenous matrix, formed into any shape or design. Also disclosed is the use of fibrous collagen to prepare this product, and a fibrous collagen matrix formed in any shape or three-dimensional design.
US 2012/024259 A1 discloses an edible pet chew for pets, primarily for dogs, that has a chewy sheet of meat based material. The "meat based" chewy sheet is said to imitate the chewy property and chewing function of known rawhide sheet and thus substitute the "meat based" chewy sheet for the known rawhide sheet to form a pet chew.
US 2010/0003393 A1 discloses an edible pet chew that is comprised of fibrous protein, water absorbing polymer, plasticizer and water. The pet chew is said to provide excellent textural properties and improved solubility in the stomach and intestinal environment for improved pet safety.
US 2012/0111284 A1 discloses a helix-shaped dog chew that has a helicoidally shaped configuration that is similar to an auger (or Archimedes' screw). The chew is fabricated from an extruded or die-case, pliable material with the consistency of a firm rubber.

### SUMMARY OF INVENTION

The present invention is directed to a pet chew product and method of modulating the textural characteristics of pet chew products. The pet chew product is an edible pet chew configured for consumption by a pet, having a twisted body formed of edible material, wherein the edible material comprises:
a. fibrous protein in an amount of 15 to 80% by weight of the chew;
b. water absorbing polymer in an amount of 5 to 35% by weight of the chew;
c. plasticizer in an amount of 5 to 40% by weight of the chew; and
d. water in an amount of 1 to 20% by weight of the chew;
wherein the twisted body of the pet chew has enhanced textural characteristics in comparison to an untwisted body formed of the same material; and wherein the twisted body has a twist angle degree range of 80° to 450°.

The textural characteristics that are enhanced in chew products having a twisted body include hardness, adhesiveness, resilience, cohesion, springiness, gumminess, chewiness, and combinations thereof. These textural characteristics may be measured using texture profile analysis. The texture profile analysis may be performed with a TA.HDi Texture Analyzer.

In one aspect of the present disclosure, a pet chew having a twisted body is provided. The twisted body of the pet chew product includes a twist angle degree ranging from about 80 to about 450°. The twist angle degree is modulated based on the desired textural characteristics. Thus, as can be appreciated, the twist angle includes all angle degrees between about 80 and about 450° as an appropriate twist angle will be selected such that the resulting chew will have a desired combination of 1 or more textural characteristics.

In one aspect of the present disclosure, the edible material used to form the twisted pet chew includes fibrous protein, water absorbing polymer, plasticizer, and water. The edible material may also include fats, starches, proteins, flavorants, preservatives, colorants, vitamins, or minerals.

In another aspect of the present invention, the edible material used to form the twisted pet chew includes protein, fat, water absorbing polymer, and carbohydrate, such as sugar. The material may also include starches, plasticizer, and water. The edible material may also include further fats, starches, proteins, flavorants, preservatives, colorants, vitamins, or minerals.

In another aspect of the present disclosure, a twisted pet chew will be formed by respective quantities of any material suitable for consumption by an animal. Such materials include protein, starch, fat, grains, carbohydrates, water, minerals, vitamins, oral care components, neutraceuticals, probiotics, pharmaceuticals, vaccines, meat, meat by products, flavorants, masking agents, water absorbing polymer, plasticizer, preservatives, and pH modifiers. The chew will be formed and then twisted to a desired twist angle that will provide the desired textural characteristics.

In yet another aspect of the present disclosure, a twisted pet chew will be formed by respective quantities of starch, such as pregelatinized wheat starch, flour, protein, fat, water, and glycerol. In preferred forms, the twisted pet chew will also have materials like propylene glycol, and chicken.

In yet another aspect of the present invention, a twisted pet chew will be formed by respective quantities of protein, preferably sodium Caseinate, protein and fat- based flavorants, such as poultry liver digest powder, sugar, such as icing sugar, water absorbing polymer, preferably gelatin, STPP and other similar compounds, calcium carbonate, potassium chloride, potassium sorbate, salt, choline chloride, Jumbone Vitamin Premix, and zinc sulfate. Preferred ranges (all by weight) of sodium Caseinate are 15-45%, 4-25% poultry lover digest,10-30%, and 5-20% gelatin.

In another aspect of the present invention, a twisted pet chew 10 as described herein is provided. The twisted pet chew may be formed from one, or a plurality of individual strands of material. Preferably, each strand of the twisted pet chew includes an axially extending cavity 20 along at least part of the length thereof. The axially extending cavity can be of any shape including oval, circular, triangular, square, or star. In preferred forms, the cavity extends the entire length of the strand. In other preferred forms, there is also a cavity that extends axially through the center of the pet chew. In the case of a pet chew comprising a plurality of strands, the central axially-extending cavity will be along an edge of each of the individual strands. Although a central cavity is preferred, it is understood that the cavity might be slightly out of center, preferably within 20% of the diameter of the pet chew, and more preferably within 10% of the diameter of the pet chew.

In another aspect of the present disclosure, a method of preparing an edible pet chew is provided. Such method includes forming a pet chew composition in accordance with any one of the formulas provided by the present disclosure. Briefly the method includes by admixing the ingredients, thermoplasticizing the pet chew composition; and molding the thermoplastic pet chew composition to form a pet chew having a twisted body. Thermoplasticizing may be by any method known in the art, such as by extrusion. The step of molding may be by any method known in the art, such as by injection molding.

In yet another aspect of the present a method of preparing an edible chew is provided. The steps of the method preferably comprise preparing a composition according to any one of the formulas provided in this disclosure, sending the composition through a device that exposes the composition to heat and pressure, and sending the composition through a die. Preferably, the die is rotated as the composition exits the die forming a twisted shape. The quicker the die is rotated, depending on the flow of the composition into the die, the sharper the twisted shape of the product.

In another aspect of the present disclosure, a method of modulating textural characteristics of a pet chew product includes the step of twisting the body of the product to form a twist angle degree where the twist angle degree is modulated to alter a textural characteristic is provided. The twist angle degree is increased to increase hardness of the product. The twist angle degree is decreased to decrease hardness of the product. In one embodiment, this is accomplished by rotating the exit die as the product exits.

Other objects, features and advantages of the present invention will become apparent from the following detailed description. It should be understood, however, that the detailed description and the specific examples, while indicating preferred embodiments of the invention, are given by way of illustration only, since various changes and modifications within the scope of the invention will become apparent to those skilled in the art from this detailed description.

### BRIEF DESCRIPTION OF DRAWINGS

The application file contains at least one photograph. Copies of this patent application publication with color photographs will be provided by the Office upon request and payment of the necessary fee. The following drawings form part of the present specification and are included to further demonstrate certain aspects of the present invention. The invention may be better understood by reference to one or more of these drawings in combination with the detailed description of specific embodiments presented herein.
**FIG. 1** shows a drawing of a tartar twisted dog chew (FIG. 1A) including the twisted exterior (FIG. 1B) and unique interior (FIG. 1C) having a hollow circle at the center with drop like openings around the center;
**FIG. 2** shows a photograph of a tarter twisted dog chew; and,
**FIG. 3** illustrates the analysis of the tartar twist dog chew thermal analysis of twisted and untwisted chews. FIG. 3A shows the location of differential scanning calorimetry (DSC) sample collection from the top curve of the tear drop shape at the end of the chew (arrow). FIG. 3B graphically illustrates the average DSC thermograms of the twisted and untwisted chews.

### DETAILED DESCRIPTION

The present invention is directed to an edible pet chew and methods for producing a nutritious product that is designed to remove plaque and tartar through mechanical abrasion while providing safe occupation and enjoyment. The composition of the pet chew creates a nutritious and functional treat, which will promote a healthy life style for the animal.

### I. Composition

The present invention includes pet chew products formed from a composition of protein, water absorbing polymer, plasticizer, and water. The composition may also include fats, starches, proteins, flavorants, preservatives, colorants, vitamins, or minerals. The pet chew of the invention is preferably a mono-component product, although it is also possible that it may form part of a dual component product. As used herein, mono-component product means that the chew product is a substantially homogeneous molded mass that may be formed into any shape desired for the pet chew.

In one aspect of the invention, the selected protein is a fibrous protein derived from animals, but does not include muscle protein, or plants. One skilled in the art would recognize that insubstantial amounts of muscle protein could be present. Fibrous proteins are generally strong and relatively insoluble. Due to such properties, fibrous proteins are important in providing structural backbone of the pet chew product. Exemplary fibrous proteins include, but are not limited to, wheat protein, wheat gluten, corn zein, corn gluten, soy protein, peanut protein, casein, keratin and mixtures thereof. Particularly preferred fibrous proteins include, without limitation, wheat protein isolate, soy protein isolate, sodium caseinate and mixtures thereof. A highly preferred fibrous protein is a mixture of wheat protein isolate, soy protein isolate and sodium caseinate.

The water absorbing polymer in the pet chew may be a gelling protein, a hydrocolloid, an edible hydrogel, or mixtures thereof. Gelling protein, sometimes known as globular protein, generally comprises globelike proteins that are relatively soluble in aqueous solutions where they form colloidal solutions or gels. Exemplary gelling proteins include, but are not limited to gelatin, albumin, plasma, pea protein, lactoglobulins, surimi (fish) proteins, whey protein and mixtures thereof. A highly preferred gelling protein is gelatin.

A hydrocolloid may be used in the pet chew composition as the water absorbing polymer. A hydrocolloid is generally defined as a macromolecule (e.g., a carbohydrate polymer or a protein) that is water soluble and forms a gel when combined with water. Exemplary hydrocolloids include, but are not limited to pectins, alginates, agars, carrageenan, xanthan gum, and guar gum.

An edible hydrogel may be used in the pet chew as the water absorbing polymer. The edible hydrogel may be a naturally occurring or synthetic material which swells in water or some liquid, retaining a large amount of the liquid without dissolving. Exemplary hydrogels include, but are not limited to maltodextrins, cetyl alcohol, chitosan, lecithins, polypeptides, waxes, and edible polymers.

In a preferred embodiment, the water absorbing polymer is a gelling protein. In a more preferred embodiment, the gelling protein is gelatin, having preferably a bloom strength in a range of about 100 to about 400.

Plasticizers dissolve in the polymer, separating polymer chains and thus facilitating molecular movement. Plasticizers are commonly used to increase workability, flexibility and extensibility of polymers. Plasticizers also reduce water activity of food systems by binding water that is otherwise available for biological reactions such as microbial growth. Exemplary plasticizers generally used in food applications include, but not limited to water, polyalcohols (e.g. sorbitol, mannitol, maltitol, glycerol, and polyethylene glycol), gum Arabic, hydrogenated starch hydrolysate and protein hydrolysate. In a preferred embodiment, the plasticizer is glycerol. In yet another preferred embodiment, the plasticizer is hydrogenated starch hydrolysate.

The invention is directed to a pet chew composition that is a mixture comprising fibrous protein in an amount of about 15 to about 80%, preferably about 20 to about 80%, more preferably about 30 to about 50% by weight of the composition, water absorbing polymer in an amount of about 5 to about 35%, preferably about 10 to about 30%, more preferably about 15 to about 25% by weight of the composition, plasticizer in an amount of about 5 to about 40%, preferably about 10 to about 35%, more preferably about 15 to about 30% by weight of the composition, and water in an amount of about 1 to about 20%, preferably about 2 to about 18%, more preferably about 5 to about 15% by weight of the composition. In a preferred embodiment the pet chew composition will contain starch in an amount less than about 35%, preferably less than about 30%, preferably less than about 20%, preferably less than about 10% and more preferably less than about 3 % by weight of the composition. This composition is thermoplasticized, preferably by extrusion, and molded to form the pet chew product. The pet chew product is preferably formed by injection molding. One skilled in the art will readily recognize that the pet chew of this invention could also be prepared by compression molding, or other techniques known in the art.

The properties of the proteinaceous materials used in the pet chew are subject to chemical and physical interactions (e.g. protein/protein and with other materials including water absorbing polymers) to improve their solubility and textural properties to enhance oral care benefits and animal safety. Animal safety is achieved through product design to minimize risk in all areas. Control of texture minimizes risks of dental fractures, controlled product size reduction through chewing reduces risk of choking, and superior solubility/digestibility eliminates risk of intestinal blockage.

The pet chew composition may also contain at least one fat, flavor enhancers, preservatives, nutrients, and/or colorants. As used herein fat includes edible oils and preferably will be liquid fat at room temperature. Exemplary fats include corn oil, soybean oil, peanut oil, cottonseed oil, grapeseed oil, sunflower oil, flaxseed oil (and other sources of omega-3 and omega-6 fatty acids), vegetable oil, palm kernel oil, olive oil, tallow, lard, shortening, butter and combinations thereof. In a preferred embodiment, the fat is vegetable oil. If the fat is present, it will generally be in a range of about 1 to about 20%, preferably about 1.5 to about 10% and more preferably about 2 to about 5% by weight of the pet chew composition. Flavors are well known. For example, the use of flavor oils such as rosemary oil, eucalyptus oil and clove oil may be employed. Nutrients include, but are not limited to vitamins, minerals, and functional ingredients. Other ingredients may also be included in the composition, for example, release agents, stabilizers, and emulsifiers.

In a preferred embodiment, the thermoplastic composition may also contain active ingredients for removal of plaque and tartar, and materials for breath freshening and general oral health.

The pet chew of the present invention demonstrates high flexibility and elastic properties to improve chewing enjoyment and lasting time. The product is designed to break down in a controlled fashion under repetitive chewing. The texture of the pet chew ensures proper balance between animal safety, oral care efficacy, enjoyment and occupancy time.

The pet chew exhibits ductile properties so that when chewed, the animal's teeth sink into the product causing the product to break down in a controlled manner under repetitive stress. The edible material can be molded into a variety of shapes to provide good strength and stiffness and other desired properties to enhance functionality and chewing enjoyment.

One embodiment includes forming or molding the edible material into a twisted body. The twisted body form provides enhanced textural characteristics in comparison to an untwisted body formed of the same edible material. The twisted body form includes a twist angle degree. The desired twist angle degree depends upon the desired textural characteristics. For example, a higher twist angle degree provides an increase in textural characteristics including, but not limited to, hardness, adhesiveness, resilience, cohesion, springiness, gumminess, chewiness, and combinations thereof. In contrast, a lower twist angle degree provides a decrease in textural characteristics including, but not limited to, hardness, adhesiveness, resilience, cohesion, springiness, gumminess, chewiness, and combinations thereof. The textural characteristics are modulated by simply adjusting the twist angle degree.

### II. Methods

The present invention includes methods of making pet chew products of the invention and modulating the textural characteristics of the pet chew products of the invention. The pet chew products of the invention are generally made by subjecting the admixture composition to extrusion, injection molding, and other similar methods known in the art.

In one aspect of the present disclosure, extrusion may be used to manufacture the products according to the present invention. Conventional ingredients are added to an extrusion apparatus and subjected to extrusion processing. It can be appreciated that all extrusion processes now known can be adapted to the disclosure of the present invention. Namely, the extrusion products can be twisted such that they have enhanced physical characteristics, as set forth herein. In some preferred forms, two streams of extruded material are co-extruded and thereafter are twisted together at a desired twist angle.

In another aspect of the present disclosure, twin-screw extrusion is utilized for the production of pellets. The pellets are subsequently melted and formed into particular shapes by post-extrusion forming, preferably by injection molding. Subsequent to injection molding, individual pieces of the products are trimmed for flash removal followed by cooling prior to packaging.

Powder ingredients are mixed in the mixer for about 5-30 minutes. Uniform mixture of powder ingredients is subsequently fed into an extruder, preferably a twin-screw extruder. Downstream from the powder inlet, liquid ingredients are added to transform the mixture of powder and liquid ingredients into a uniformly plasticized, moldable mass in the presence of heat and shear. During this process, the moldable mass is also cooked by the increased temperature in the extruder barrels. The temperature profile of the extruder barrels are determined by, among others, the composition, pressure, residence time in the extruder barrels, screw profile, screw speed and shear rate.

The temperature and shear in the extruder zones will be set to provide sufficient thermoplastification. This may be achieved with temperatures in a range of about 88°C to about 141°C in the middle zones and lower temperatures at either end of the barrel. Of course, greater temperatures may be employed in the middle zones.

Thus the temperature can be controlled across the barrel to enable optional venting of energy and moisture along the extruder. Forced venting may also be achieved by using vent/vacuum stuffers at the end of process section where most cooking is achieved on the moldable mass inside the extruder barrel.

At the extruder exit, extrudate is forced through a die with small orifices. Immediately behind the die, the extrudate is exposed to increasing pressure and temperature due to the restriction imposed by the small die openings thus use of extra cooling becomes increasingly important to ensure pellet quality. In order to form a twisted product, the die can be rotated as the product exits the die.

Subsequent to exiting the extruder die, the plasticized extrudate is cut at the die surface by a surface cutter equipped with at least one blade in to small pellets. Rotational speed of the cutter may be adjusted depending on the size requirements of the pellets in addition to flow properties of the extrudate. Product temperature at the die exit may range from about 82°C to about 95°C and is most preferably about 85°C.

After cutting, pellets are placed on moving conveyors to carry the pellets away from the extruder exit. This process also facilitates cooling of the pellets to prevent caking which reduces the need for a subsequent de-clumping step in the process sequence. Conveyors may be kept at ambient temperatures; however, in order to reduce cooling time, forced air circulation with chiller air may be applied to induce rapid cooling.

Depending on the formulation, speed and extent of cooling, pellets may stick together forming clumps of variable sizes. These clumps must be reduced in size, achieved by de-clumping, to ensure a steady and stable injection molding process. Subsequent to cooling and de-clumping, pellets are conveyed to injection molding, where the final product shape is achieved.

In another embodiment, the powder and liquid ingredients may be combined together in a high shear mixer to form a uniform mass. The uniform mass may be fed directly into the injection molder's barrel.

Subsequent to injection molding, the product is cooled and subjected to a de-flashing process where excess material on the product is removed. De-flashing may be achieved by vibration of product inside vibrating hoppers, vibrating tables, tumblers or a combination thereof.

In some embodiments, an injection molding process may be used to prepare the pet chew product. Material for the injection molding process may be delivered in containers in the form of pellets. Occasionally, due to transport, load pressure and the nature of the recipe, the pellets have a tendency to pack together and form large adhesive blocks. Thus, if necessary, each container is transferred to a de-clumper to break up and separate the individual pellets to allow feeding into the injection molders. The individual pellets are collected in a container and then vacuum fed to a feeder leading to the injection molders for forming.

As the pellets are conveyed across the injection molder screw, the high temperatures, shear and pressure generated by the screw transforms the solid pellets into a melted product that can be injected into the mold and take form. The melted product travels through the sprue and/or manifolds, runners and/or nozzles and then the cavities to form the final product shape. Once the shot is complete, the injection screw will retract and refill with melted product for the next shot.

As the injection molder is being filled, the formed products in the cavities are either cooled or heated as required to cool and/or set the products. Once the desired cooling or set time is achieved, the mold opens and the products are released from the cavities through ejector pins on the backside of the product. The molded products fall on to a mechanical conveyor, which are subsequently collected for cooling. If runners are present, they are removed and the molded products are laid out on a cooling table to allow the temperature of the chews to reach ambient temperature prior to packaging.

It is also possible to simply admix the ingredients for the formulation and go directly to the injection molder so long as the parameters are controlled to achieve thermoplasticization of the formulation.

In a preferred embodiment, the pet chew product is formed or molded into a twisted body to modulate the textural characteristics of the product. The twisted body is formed by introducing twist angle degrees in the product. The twisted body form provides enhanced textural characteristics in comparison to an untwisted body formed of the same edible material. In the present disclosure, the twist angle degree may range from 40° to more than 440°. Such twist angle degrees include about 45°, 50°, 55°, 60°, 65°, 70°, 75°, 80°, 85°, 90°, 95°, 100°, 110°, 120°, 130°, 140°, 150°, 160°, 170°, 180°, 190°, 200°, 210°' 220°, 230°, 240°, 250°, 260°, 270°, 280°, 290°, 300°, 310°, 320°, 330°, 340°, 350°, 360°, 370°, 380°, 390°, 400°, 410°, 420°, 430°, 440°, or more. In the present invention, the twist angle degree ranges from 80° to 450°. The twist angle depends upon the desired use of the finished product. For instance, if the finished product is intended for a pet weighing less than 6.8 kg (15 pounds), a product having a lower twist angle degree may be desired. In contrast, if the finished product is intended for a pet weighing more than 6.8 kg (15 pounds), a product having a higher twist angle degree may be desired. Higher degree angles of twist have more twists per inch, while lower degree angles of twist have fewer twists per inch.

The desired twist angle degree depends upon the desired textural characteristics. For example, a higher twist angle degree provides an increase in textural characteristics including, but not limited to, hardness, adhesiveness, resilience, cohesion, springiness, gumminess, chewiness, and combinations thereof. In contrast, a lower twist angle degree provides a decrease in textural characteristics including, but not limited to, hardness, adhesiveness, resilience, cohesion, springiness, gumminess, chewiness, and combinations thereof. The textural characteristics are modulated in proportion to the twist angle degree.

The textural characteristics of a twisted pet chew product are enhanced in comparison to the textural characteristics of an untwisted pet chew product made of the same edible material. The enhanced textural characteristics may include an increase in hardness, adhesiveness, resilience, cohesion, springiness, gumminess, chewiness, or combinations thereof, for the twisted pet chew product in comparison to the untwisted pet chew product made of the same material.

A comparison of the textural characteristics may be made by taking texture measurements of samples from the twisted pet chew product and the untwisted pet chew product with a TA.HDi Texture Analyzer (Texture Technologies Corp., Scarsdale, N.Y.). The samples are taken from the outer surface of the products. For example, the samples may be analyzed with a TA.HDi Texture Analyzer equipped with a 250-500 kg load cells. A 5 mm diameter cylindrical probe may be used for uniaxial compression or puncture tests, and the tests may be conducted at a room temperature of 25°C. Data is collected and compared.

An enhancement of textural characteristics is evidenced by an increase that is about 5-99% more than the untwisted sample. Preferably, the increase is about 6, 7, 8, 9, 10, 15, 20, 25, 30, 35, 40, 45, 50, 55, 60, 65, 70, 75, 80, 85, 90, 95, 98, 99%, or more.

In yet another embodiment of this invention, it may be desirable to modulate the textural characteristics of the twisted pet chew based on the intended recipient pet size, pet weight, pet breed, length of chew product, or combinations thereof.

### EXAMPLES

The following examples are simply intended to further illustrate and explain the present invention. The invention, therefore, should not be limited to any of the details in these examples.

### Example 1. Formulation for Tarter Twist Dog Chew

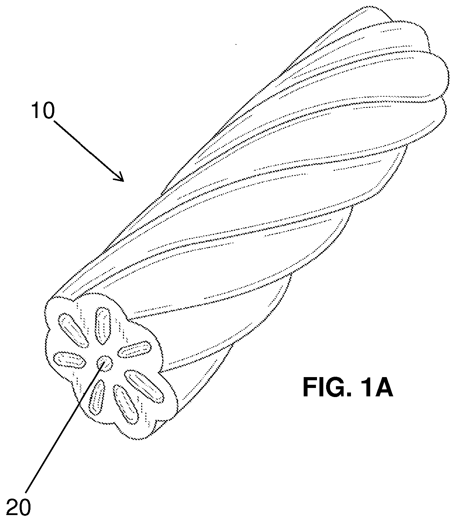

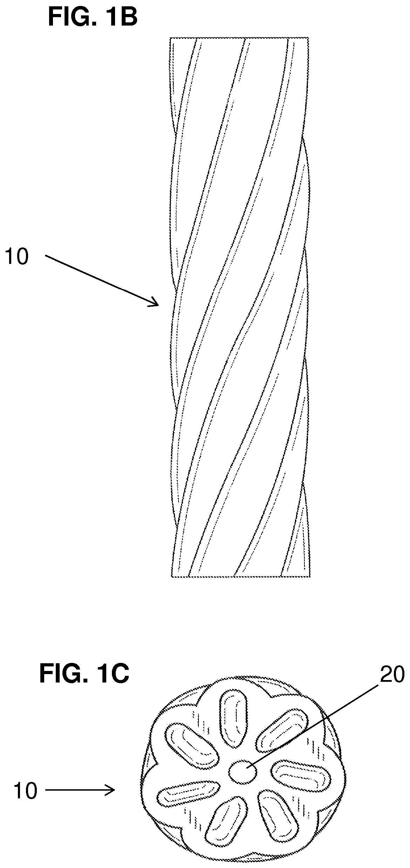

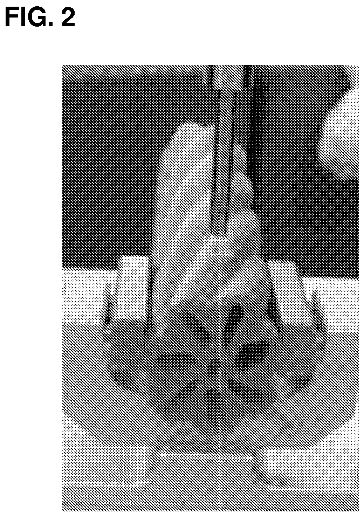

One embodiment of the present invention is a pet chew product 10 having a twisted body (FIG. 1-FIG. 2). An exemplary example of a recipe of ingredients is listed in Tables 1-2.

**Table 1. Hollow Chew Preliminary Premix 1.**

| **Ingredient** | **Percentage** |
|---|---|
| Sodium Caseinate | 15-45 |
| Poultry Liver Digest Powder | 4-25 |
| Icing Sugar | 10-30 |
| Gelatin, 100 bloom | 5-20 |

**Table 2. Formulation used to test how twisting affects physical characteristics of products.**

| | | | **With Moisture Balance** |
|---|---|---|---|
| **Tarter Twist Recipe, Large & Small/Medium** | | | **Final Recipe** |
| **GRD** | **Ingredient** | **Percentage** | **Percentage** |
| 1001513 | Wheat Starch, Pregelatinized | 34 | 34 |
| 1051970 | Flour, Soft | 20 | 20 |
| 1230404 | Hollow Chew Premix | 18 | 17 |
| 1001191 | Water | 12 | 13 |
| 1000803 | Glycerol | 10 | 10 |
| 1037727 | Cellulose fiber | 3 | 3 |
| 1037909 | Propylene Glycol | 2 | 2 |
| 1037851 | Chicken Smoke Flavor, Liquid, Oil | 1 | 1 |
| | Moisture Loss | -3 | -3 |

### Example 2. Tartar Twist Dog Chew Product Specification.

The tartar twist dog chews are an extruded mono-component bone designed specifically for different sized dogs. The chew has a twisted body that enhances textural characteristics of the chew over textural characteristics of the chew having an un-twisted body. The chew is an oral care and occupancy bone designed to help dogs keep their teeth clean and to keep occupied. Tables 3-6 illustrate the twist degree of angle used to affect the textural characteristics of the chew.

**Table 3. Tartar Twist Degree of Angle.**

| **Twist** | | | | | | **Length (mm)** | **Diameter (mm)** |
|---|---|---|---|---|---|---|---|
| **Size** | | **Most Preferred** | **Preferred** | **Least Preferred** | **Not Preferred** | | |
| Mini | | 345 ≤ 360 ≥ 375 | 331 - 345 or 375 - 390 | 270 - 329 or 391 - 420 | <270 or >420 | 93 | 15.2 |
| Small/Med | | 135 ≤ 150 ≥ 165 | 121-135 or 165 - 180 | 90 - 119 or 181 - 210 | <90 or >210 | 121 | 29.5 |
| Large | | 165 ≤ 180 ≥ 200 | 151 - 165 or 200 - 210 | 120 - 149 or 211 - 240 | <120 or >240 | 150 | 38.2 |

**Table 4. Large Tartar Twist Chew Attributes.**

| Parameter | A (Target) | B (Acceptable) | C (Unacceptable) |
|---|---|---|---|
| Dimensions (mm) | | | |
| A - Length | [148.0 - 150.0 - 152.0] | [144.0 - 148.0] or [152.0 -156.0] | < 144.0 or > 156.0 |
| B - Diameter | [36.8 - 38.2 - 39.6] | [34.0 - 36.8] or[39.6 - 42.4] | < 34.0 or > 42.4 |

| Weights (g) | | | |
|---|---|---|---|
| Piece Weight (g) | [133.0 - 140.0-147.0] | [125.0 - 133.0] or >147.0 | < 125.0 |

| Twist | | | |
|---|---|---|---|
| Angle Degree | [150 - 180 - 210] | [90-150] or [210 - 270] | <90 or >270 |

| Moisture and Water Activity | | | |
|---|---|---|---|
| Moisture | [14.0 - 15.5 - 16.5] | [13.0 - 14.0] or [16.5 - 17.0] | <13.0 or > 17.0 |
| Water Activity | [0.64 - 0.66 - 0.68] | [0.62 - 0.64] or [0.68 - 0.71] | <0.62 or >0.71 |

**Table 5. Small/Medium Tartar Twist Chew Attributes.**

| Parameter | A (Target) | B (Acceptable) | C (Unacceptable) |
|---|---|---|---|
| Dimensions (mm) | | | |
| A - Length | [114.1 - 121.0 - 127.8] | [ 100.3 - 114.1] or [127.8 -131.0] | < 100.3 or > 131.0 |
| B - Diameter | [28.0 - 29.5 - 31.0] | [26.5 - 28.0] or [31.0 - 32.5] | < 26.5 or > 32.5 |

| Weights (g) | | | |
|---|---|---|---|
| Piece Weight (g) | [67.0 - 71.5- 76.0] | [65.0 - 67.0] or >76 | < 65.0 |

| Twist | | | |
|---|---|---|---|
| Angle Degree | [120 - 150 - 180] | [90-120] or [180 - 210] | <90 or >210 |

| Moisture and Water Activity | | | |
|---|---|---|---|
| Moisture | [14.5 - 15.5 - 16.5] | [13.0 - 14.5] or [16.5 - 17.0] | <13.0 or > 17.0 |
| Water Activity | [0.64 - 0.66 - 0.68] | [0.62 - 0.64] or [0.68 - 0.71] | <0.62 or >0.71 |

**Table 6. Mini Tartar Twist Chew Attributes.**

| Parameter | A (Target) | B (Acceptable) | C (Unacceptable) |
|---|---|---|---|
| Dimensions (mm) | | | |
| A - Length | [90.0 - 93.0 - 96.0] | [84.0 - 90.0] or [96.0 - 102.0] | < 84.0 or > 102.0 |
| B - Diameter | [14.2 - 15.2 - 16.1] | [12.4 - 14.2] or [16.1-18.0] | < 12.4 or > 18.0 |

| Weights (g) | | | |
|---|---|---|---|
| Piece Weight (g) | [14.8 - 17.2 - 19.6] | [10.0 - 14.8] or >19.6 | < 10.0 |

| Twist | | | |
|---|---|---|---|
| Angle Degree | [330 - 360 - 390] | [270-330] or [390 - 420] | <270 or >420 |

| Moisture and Water Activity | | | |
|---|---|---|---|
| Moisture | [11.0 - 12.4 - 13.8] | [10.0 - 11.0] or [13.8 - 15.0] | <10.0 or > 15.0 |
| Water Activity | [0.60 - 0.62 - 0.65] | [0.58 - 0.60] or [0.65 - 0.68] | <0.58 or >0.68 |

### Example 3. Thermal Property Analysis of Tartar Twist Dog Chew

The effect of twisting the chew product of Example 1 in relation to thermal properties was analyzed. The objective of this analysis was to determine the temperature and heat flow associated with material transitions or changes with respect to temperature of twisted and untwisted chews made using the formation of Example 1.

Differential Scanning Calorimetry (DSC) measures the difference in heat flow rate between a sample and reference material as a function of time and temperature. Changes in the physical or chemical state of a material (when heated) usually results in a change in energy level. The transitions or changes that occur may be the result of either endothermic (energy absorption) or exothermic (energy loss) processes. Examples of endothermic processes include heating, melting (i.e. the conversion of a solid phase to a liquid phase), evaporation (i.e. the conversion of liquid to gas phase/state when heat is applied/absorbed, denaturation (i.e. the unfolding of protein molecules when heat is applied), and glass transition (i.e. the point where a hard, solid amorphous material undergoes a transformation/change to a soft, rubbery liquid state). Examples of exothermic processes include crystallization (i.e. the conversion of either a solid structure or liquid structure to a more organized state), cooling, oxidation, etc.

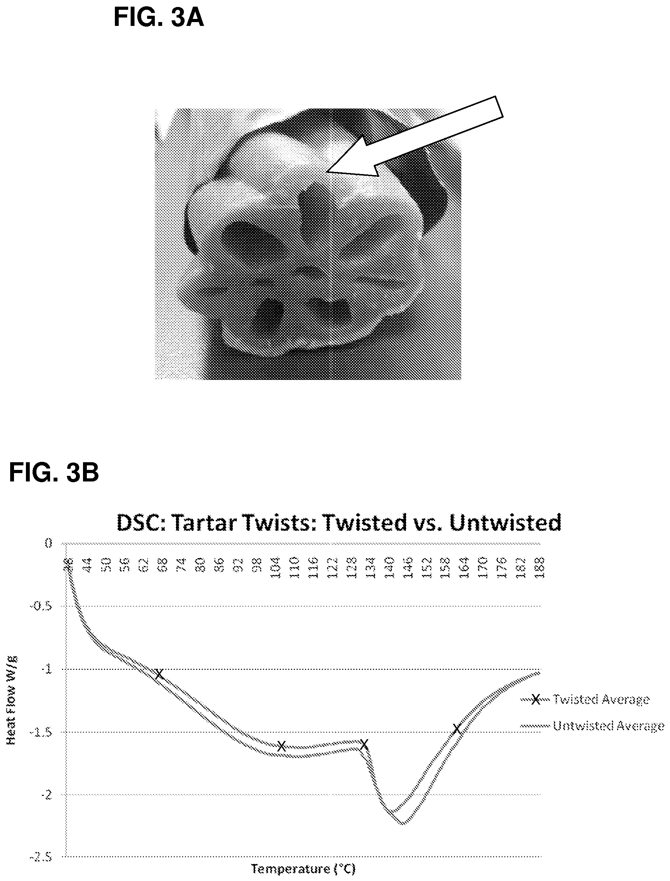

The DSC sample was collected from the top curve of the tear drop shape at the end of the bone (FIG. 3A, arrow). Differential scanning calorimetry was used to study gelatinization of the raw ingredients. The scan was performed while ramping the temperature from 35°C to 200°C at a rate of 20°C/min. The samples were analyzed in triplicate to determine variance in each sample.

The changes in heat flow associated with material transitions were measured under a constant temperature ramp. In the model system, the Tartar Twist endotherms were similar when comparing twisted to untwisted (FIG. 3B). Overall, the model system presented similar DSC endotherms of the twisted Tartar Twist and the untwisted Tartar Twists suggesting that the twisting of the product does not change the thermal properties of the product

### Example 4. Texture Profile Analysis of Tarter Twist Dog Chew

The effect of twisting the chew product of Example 1 in relation to texture differences was analyzed. The objective was to determine the texture differences between a twisted and untwisted product by performing a texture profile analysis (TPA).

The TA-HDplusTextuer Analyzer is used to determine the texture differences between a twisted and untwisted product by performing TPA on each bone using a tensile grip base plate and a 5 mm probe. The multiple probes into the same spot represent a dog chewing on the bone. The puncture probe goes 75% into the product twice and gives the hardness, adhesiveness, resilience, cohesion, springiness, gumminess, and chewiness of the bone. Adhesiveness describes how the product bonds to other surfaces, resilience is defined by how the bone returns to its original shape following puncture, cohesion is how well the product resists separation, springiness is the elasticity of the product, gumminess is the energy required to disintegrate a food to a state where it is ready to be swallowed, and chewiness is the energy required to masticate the product. Gumminess takes into consideration hardness and cohesiveness, and chewiness takes into consideration overall hardness, cohesiveness, and springiness. A total of 10 replicates were performed on each type and size of bone using each method and the average of the 10 replicates was calculated.

Overall, the twisted product is harder, more adhesive, more resilient, more cohesive, springier, gummier, and chewier for all sizes of dog chews tested using the TPA (Table 7).

**Table 7. Results for Texture Profile Analysis.**

| **Sample ID** | **Hardness (g)** | **Adhesiveness (g.sec)** | **Resilience (%)** | **Cohesion** | **Springiness (%)** | **Gumminess** | **Chewiness** |
|---|---|---|---|---|---|---|---|
| **Twisted Sm/Med** | 27956.70 ±2202.03 | -37169.27 ±5826.68 | 12.28±5.63 | 0.41±0.03 | 51.15±33.96 | 11433.97 ±1390.24 | 5756.55 ±3737.26 |
| **Untwisted Sm/Med** | 22368.15 ±2970.48 | -24792.20 ±5564.15 | 6.62±3.11 | 0.37±0.04 | 23.92±7.62 | 8164.61 ±1060.96 | 1948.61 1635.98 |
| **Twisted Large** | 23833.91 ±1502.95 | -52580.52 ±5453.46 | 22.79±6.61 | 0.39±0.02 | 23.08±5.67 | 9309.37 1945.67 | 2138.90 1538.66 |
| **Untwisted Large** | 22194.61 ±886.28 | -42412.03 ±10335.14 | 17.39±4.98 | 0.39±0.05 | 17.46±7.30 | 8669.90 ±1059.50 | 1537.67 ±697.01 |

### Example 5

A series of dog chews will be produced using a twin-screw cooker extruder, providing a combination of heating and mechanical shear sufficient to gelatinize at least a portion of the starch component of the recipe, where the recipe can be any recipe disclosed herein. Optionally, the heat and shear also reaches a level that provides a microbiological kill step for the product, achieving at least a temperature of 90 degrees Celsius. A rotatable die will be used such that when the product exits the die, the die is rotated, forming a twisted dog chew. The texture of the chew will be determined by the degree of twist resulting from the rotation of the die head when the product exits the extruder.

The invention illustratively disclosed herein suitably may be practiced in the absence of any element, which is not specifically disclosed herein. It is apparent to those skilled in the art, however, that many changes, variations, modifications, other uses, and applications to the method are possible.

## Claims

1. An edible pet chew configured for consumption by a pet comprising a twisted body formed of an edible material, wherein the edible material comprises:
a. fibrous protein in an amount of 15 to 80% by weight of the chew;
b. water absorbing polymer in an amount of 5 to 35% by weight of the chew;
c. plasticizer in an amount of 5 to 40% by weight of the chew; and,
d. water in an amount of 1 to 20% by weight of the chew;
wherein the twisted body has enhanced textural characteristics in comparison to an untwisted body formed of the edible material, and
wherein the twisted body has a twist angle degree range of 80° to 450°.

2. The pet chew of claim 1, wherein the textural characteristics are selected from the group consisting of hardness, adhesiveness, resilience, cohesion, springiness, gumminess, chewiness, and combinations thereof.

3. The pet chew of claim 1 or claim 2, wherein the twist angle degree range is 80° to 220°.

4. The pet chew of claim 1 or claim 2, wherein the twist angle degree range is 80° to 280°.

5. The pet chew of claim 1 or claim 2, wherein the twist angle degree range is 260° to 440°.

6. The pet chew of claim 3, wherein the pet chew is for a pet that weighs more than 16 kg (35 pounds).

7. The pet chew of claim 4, wherein the pet chew is for a pet that weighs between 6.8 and 20 kg (15 and 45 pounds).

8. The pet chew of claim 5, wherein the pet chew is for a pet that weighs less than 6.8 kg (15 pounds).

9. The pet chew of any one of the preceding claims, wherein said twisted body includes an axially extending cavity (20) extending along at least a portion of the length of the body.

10. The pet chew of any one of the preceding claims, wherein said twisted body includes a plurality of strands that are twisted together.

11. The pet chew of claim 10, wherein each said strand has an axially extending cavity along at least a portion of the length of the body.

12. A method of preparing an edible pet chew comprising:
a. forming a pet chew composition by admixing (i) fibrous protein in an amount of 15 to 80% by weight of the composition, (ii) water absorbing polymer in an amount of 5 to 35% by weight of the chew, (iii) plasticizer in an amount of 5 to 40% by weight of the composition, and (iv) water in an amount of 1 to 20% by weight of the composition;
b. thermoplasticizing the pet chew composition; and,
c. forcing the pet chew composition through a die to form a pet chew having a twisted body, wherein the twisted body has a twist angle degree range from 80° to 440°.

13. The method of claim 12, wherein the die is twisted as the pet chew composition exits the die forming the pet chew having a twisted body.

14. The method of claim 12, wherein the pet food composition is twisted using a separate twisting device positioned after the die.

## Patentansprüche

1. Verzehrbares Haustier-Kauprodukt, das zum Verzehr durch ein Haustier gestaltet ist, umfassend einen verdrehten Körper, der aus einem verzehrbaren Material gebildet ist, wobei das verzehrbare Material umfasst:
a. Faserprotein in einer Menge von 15 bis 80 Gew.-% des Kauprodukts;
b. wasserabsorbierendes Polymer in einer Menge von 5 bis 35 Gew.-% des Kauprodukts;
c. Weichmacher in einer Menge von 5 bis 40 Gew.-% des Kauprodukts; und
d. Wasser in einer Menge von 1 bis 20 Gew.-% des Kauprodukts;
wobei der verdrehte Körper verbesserte Textureigenschaften im Vergleich zu einem nicht verdrehten Körper, der aus dem verzehrbaren Material gebildet ist, aufweist, und
wobei der verdrehte Körper einen Verdrehungswinkelbereich von 80° bis 450° aufweist.

2. Haustier-Kauprodukt nach Anspruch 1, wobei die Textureigenschaften ausgewählt sind aus der Gruppe bestehend aus Härte, Haftvermögen, Zähigkeit, Kohäsion, Elastizität, Gummiartigkeit, Kaubarkeit und Kombinationen davon.

3. Haustier-Kauprodukt nach Anspruch 1 oder Anspruch 2, wobei der Verdrehungswinkelbereich 80° bis 220° beträgt.

4. Haustier-Kauprodukt nach Anspruch 1 oder Anspruch 2, wobei der Verdrehungswinkelbereich 80° bis 280° beträgt.

5. Haustier-Kauprodukt nach Anspruch 1 oder Anspruch 2, wobei der Verdrehungswinkelbereich 260° bis 440° beträgt.

6. Haustier-Kauprodukt nach Anspruch 3, wobei das Haustier-Kauprodukt für ein Haustier ist, das mehr als 16 kg (35 Pounds) wiegt.

7. Haustier-Kauprodukt nach Anspruch 4, wobei das Haustier-Kauprodukt für ein Haustier ist, das zwischen 6,8 und 20 kg (15 und 45 Pound) wiegt.

8. Haustier-Kauprodukt nach Anspruch 5, wobei das Haustier-Kauprodukt für ein Haustier ist, das weniger als 6,8 kg (15 Pound) wiegt.

9. Haustier-Kauprodukt nach einem der vorstehenden Ansprüche, wobei der verdrehte Körper einen axial verlaufenden Hohlraum (20) aufweist, der entlang wenigstens eines Abschnitts der Länge des Körpers verläuft.

10. Haustier-Kauprodukt nach einem der vorstehenden Ansprüche, wobei der verdrehte Körper eine Mehrzahl von Strängen enthält, die zusammengedreht sind.

11. Haustier-Kauprodukt nach Anspruch 10, wobei jeder Strang einen axial verlaufenden Hohlraum entlang wenigstens eines Abschnitts der Länge des Körpers aufweist.

12. Verfahren zur Herstellung eines verzehrbaren Haustier-Kauprodukts, umfassend:
a. Bilden einer Haustier-Kauproduktzusammensetzung durch Mischen von (i) Faserprotein in einer Menge von 15 bis 80 Gew.-% der Zusammensetzung, (ii) wasserabsorbierendem Polymer in einer Menge von 5 bis 35 Gew.-% des Kauprodukts, (iii) Weichmacher in einer Menge von 5 bis 40 Gew.-% der Zusammensetzung und (iv) Wasser in einer Menge von 1 bis 20 Gew.-% der Zusammensetzung;
b. Thermoplastifizieren der Haustier-Kauproduktzusammensetzung; und
c. Drücken der Haustier-Kauproduktzusammensetzung durch eine Düse, um ein Haustier-Kaumprodukt mit einem verdrehten Körper zu bilden, wobei der verdrehte Körper einen Verdrehungswinkelbereich von 80° bis 440° aufweist.

13. Verfahren nach Anspruch 12, wobei die Düse gedreht wird, während die Haustier-Kauproduktzusammensetzung aus der Düse austritt, um das Haustier-Kauprodukt mit einem verdrehten Körper zu bilden.

14. Verfahren nach Anspruch 12, wobei die Haustierfutterzusammensetzung unter Verwendung einer getrennten Drehvorrichtung, die nach der Düse angeordnet ist, verdreht wird.

## Revendications

1. Produit à mâcher comestible pour animaux de compagnie configuré pour être consommé par un animal de compagnie comprenant un corps torsadé formé d'une matière comestible, dans lequel la matière comestible comprend :
a. des protéines fibreuses en une quantité de 15 à 80 % en poids du produit à mâcher ;
b. un polymère absorbant l'eau en une quantité de 5 à 35 % en poids du produit à mâcher ;
c. un plastifiant en une quantité de 5 à 40 % en poids du produit à mâcher ; et,
d. de l'eau en une quantité de 1 à 20 % en poids du produit à mâcher ;
dans lequel le corps torsadé présente des caractéristiques texturales améliorées par rapport à un corps non torsadé formé de la matière comestible, et
dans lequel le corps torsadé a une plage de degrés d'angle de torsion de 80° à 450°.

2. Produit à mâcher pour animaux de compagnie selon la revendication 1, dans lequel les caractéristiques texturales sont choisies dans le groupe constitué par la dureté, l'adhésivité, la résilience, la cohésion, l'élasticité, la consistance gommeuse, la masticabilité, et des combinaisons de celles-ci.

3. Produit à mâcher pour animaux de compagnie selon la revendication 1 ou la revendication 2, dans lequel la plage de degrés d'angle de torsion est de 80° à 220°.

4. Produit à mâcher pour animaux de compagnie selon la revendication 1 ou la revendication 2, dans lequel la plage de degrés d'angle de torsion est de 80° à 280°.

5. Produit à mâcher pour animaux de compagnie selon la revendication 1 ou la revendication 2, dans lequel la plage de degrés d'angle de torsion est de 260° à 440°.

6. Produit à mâcher pour animaux de compagnie selon la revendication 3, dans lequel le produit à mâcher pour animaux de compagnie est destiné à un animal de compagnie qui pèse plus de 16 kg (35 livres).

7. Produit à mâcher pour animaux de compagnie selon la revendication 4, dans lequel le produit à mâcher pour animaux de compagnie est destiné à un animal de compagnie qui pèse entre 6,8 et 20 kg (15 et 45 livres).

8. Produit à mâcher pour animaux de compagnie selon la revendication 5, dans lequel le produit à mâcher pour animaux de compagnie est destiné à un animal de compagnie qui pèse moins de 6,8 kg (15 livres).

9. Produit à mâcher pour animaux de compagnie selon l'une quelconque des revendications précédentes, dans lequel ledit corps torsadé comprend une cavité s'étendant axialement (20) s'étendant le long d'au moins une partie de la longueur du corps.

10. Produit à mâcher pour animaux de compagnie selon l'une quelconque des revendications précédentes, dans lequel ledit corps torsadé comprend une pluralité de brins qui sont torsadés ensemble.

11. Produit à mâcher pour animaux de compagnie selon la revendication 10, dans lequel chacun desdits brins a une cavité s'étendant axialement le long d'au moins une partie de la longueur du corps.

12. Procédé de préparation d'un produit à mâcher comestible pour animaux de compagnie, comprenant :
a. la formation d'une composition de produit à mâcher pour animaux de compagnie en mélangeant (i) des protéines fibreuses en une quantité de 15 à 80 % en poids de la composition, (ii) un polymère absorbant l'eau en une quantité de 5 à 35 % en poids du produit à mâcher, (iii) un plastifiant en une quantité de 5 à 40 % en poids de la composition, et (iv) de l'eau en une quantité de 1 à 20 % en poids de la composition ;
b. la thermoplastification de la composition de produit à mâcher pour animaux de compagnie ; et,
c. le fait de forcer la composition de produit à mâcher pour animaux de compagnie à travers une filière pour former un produit à mâcher pour animaux de compagnie ayant un corps torsadé, le corps torsadé ayant une plage de degrés d'angle de torsion de 80° à 440°.

13. Procédé selon la revendication 12, dans lequel la filière est torsadée lorsque la composition de produit à mâcher pour animaux de compagnie sort de la filière formant le produit à mâcher pour animaux de compagnie ayant un corps torsadé.

14. Procédé selon la revendication 12, dans lequel la composition alimentaire pour animaux de compagnie est torsadée en utilisant un dispositif de torsion distinct positionné après la filière.
